# EUROPÄISCHE PATENTSCHRIFT

(11) **EP 0 481 369 B1**
(45) Veröffentlichungstag und Bekanntmachung des Hinweises auf die Patenterteilung: **24.07.1996**
(21) Anmeldenummer: 91117345.8
(22) Anmeldetag: 11.10.1991
(51) Int. Cl.: H01R 43/048

(54) **Vorrichtung zur Erfassung der Kraft beim Verpressen von Kabelschuhen (Krimpkraft)**
Device for measuring the crimping force applied to a terminal
Dispositif pour la mesure de l'effort de sertissage appliqué à une cosse

(30) Priorität: 18.10.1990 DE 9014442 U
(43) Veröffentlichungstag der Anmeldung: 22.04.1992
(73) Patentinhaber: AAT ASTON GmbH, Geräte für Elektronikfertigung und Kabelbearbeitung, D-90429 Nürnberg (DE)
(72) Erfinder: Gross, Hermann, W-8510 Fürth/Bayern (DE)
(74) Vertreter: Hafner, Dieter, Dr.rer.nat., Dipl.-Phys.

(56) Entgegenhaltungen:
- EP-A- 0 291 329
- EP-A- 0 367 521
- DE-A- 3 737 924

## Beschreibung

Die vorliegende Neuerung betrifft eine Vorrichtung zur Erfassung der Kraft beim Verpressen von Kabelschuhen (Krimpkraft) unter Verwendung einer mechanisch, pneumatisch oder hydraulisch angetriebenen Krimppresse.

Um Kabel mit elektrischen Bauteilen verbinden zu können, werden die Isolierungen am Kabelende entfernt und die offene Litze mit einem Kabelstecker oder auch "Kabelschuh" genannt verpreßt. Besonders im Bereich der Automobiltechnik werden mit Kabelschuhen versehene Kabel eingesetzt. Manche Verbindungen von Kabellitze und Kabelschuh sind häufig Ursache von Störungen, die nur schwierig bzw. unter Schwierigkeiten zugeordnet werden können. Man denke hierbei an Zündstörungen beim Kfz, welche durch eine mangelhafte Verbindung von Kabellitze und Kabelschuh hervorgerufen werden können. Probleme ergeben sich beispielsweise dann, wenn ein Teil der Isolierung mit eingepreßt wird oder wenn während der Abisolierung einzelne Drähte der Litze entfernt worden sind und anschließend verpreßt wird, oder bei zu hohem oder zu geringem Preßdruck.

Aus der DE-PS 38 42 009 ist eine Vorrichtung zum Crimpanschluß von elektrischen Verbindungselementen an elektrischen Leitungen bekannt, welche Sensorelemente zur Ermittlung der Verpreßkraft aufweist. Es wird vorgeschlagen, derartige Sensoren fest im Bereich des Unterwerkzeugs und dort insbesondere im Bereich des zum Ständer hinführenden Widerlagers anzuordnen. Bei einem Austausch des unteren Preßwerkzeugs findet somit zwangsläufig gleichzeitig ein Austausch des Sensorelementes statt.

Der Erfindung liegt nunmehr die Aufgabe zugrunde, eine gattungsgemäße Vorrichtung anzubieten, bei welcher der Austausch des Preßwerkzeugs nicht zwangsläufig mit dem Austausch des Sensorelementes verbunden ist.

Die Aufgabe wird durch den kennzeichnenden Teil des Patentanspruchs 1 gelöst. Vorteilhafte Ausführungsformen werden durch die Unteransprüche 2 - 15 realisiert.

Die Aufgabe wird erfindungsgemäß dadurch gelöst, daß eine Zwischenplatte vorgesehen ist, welche auf austauschbare Weise unter einer Halteplatte angebracht ist, auf welcher der untere Teil des Preßwerkzeugs montiert ist. Der Sensor befindet sich somit besonders nahe an den Preßwerkzeugen, wodurch maschinenbedingte Störeinflüsse (z.B. Verwindungsfestigkeit der Presse etc.) vermieden werden. Durch die erfindungsgemäße Verwendung einer Zwischenplatte kann die Vorrichtung zwischen einzelnen Pressen in einfacher Weise ausgetauscht werden und die Vorrichtung somit als ,,mobile" Vorrichtung verwendet werden. Die erfindungsgemäße Vorrichtung ist zudem konstruktiv einfach aufgebaut.

Zweckmäßigerweise ist als Sensor mindestens ein Dehnmeßstreifen vorgesehen. Mittels des Dehnmeßstreifens läßt sich die Durchbiegung der Zwischenplatte aufgrund der auf den Kabelschuh einwirkenden Kraft feststellen.

Um eine möglichst hohe Meßgenauigkeit d. h. einen möglichst großen Meßbereich zu erreichen, liegt der Dehnmeßstreifen im Bereich der Kraftflußlinie.

Zweckmäßigerweise ist der Dehnmeßstreifen hierbei derart angeordnet, daß die Kraftflußlinie den Dehnmeßstreifen mittig schneidet. Unter "Kraftflußlinie" wird diejenige Linie bzw. deren Verlängerung verstanden, welche am Oberflächenbereich die höchste Zugbelastung aufweist.

Eine wesentliche Erhöhung der Meßgenauigkeit läßt sich dadurch erreichen, daß die Zwischenplatte oberflächenbehandelt ist. Die Meßgenauigkeit des Dehnmeßstreifens läßt sich durch diese Maßnahme um ein Vielfaches erhöhen.

Zweckmäßigerweise ist die Zwischenplatte zumindest im Bereich der Dehnmeßstreifen spanend bearbeitet, z. B. geschliffen und/oder poliert.

Gemäß einer weiteren Ausgestaltung der vorliegenden Neuerung sind mehrere Dehnmeßstreifen an unterschiedlichen Stellen der Zwischenplatte vorgesehen, um vergleichende Messungen durchführen zu können oder zusätzliche Variable wie etwa Temperatur-bedingte Spannungsveränderungen etc. zu erfassen und hierdurch die Meßgenauigkeit noch erhöhen zu können.

Aufgrund des Schutzes vor mechanischen Einflüssen und insbesondere der Möglichkeit der Erfassung von Zugkräften ist der oder sind die Dehnmeßstreifen an der Unterseite der Zwischenplatte d. h. der dem Preßwerkzeug abgewandten Seite angeordnet.

Eine weitere Ausgestaltung der neuerungsgemäßen Vorrichtung zeichnet sich dadurch aus, daß die Zwischenplatte eine Durchführung aufweist, welche eine Entfernung von beim Krimpen entstehendem Abfall erlaubt.

Zur Signalaufbereitung ist ein Verstärker, ein A/D-Wandler, eine Einrichtung zur elektronischen Auswertung und/oder ein Rechner sowie eine Anzeigevorrichtung vorgesehen.

Zweckmäßigerweise vergleicht die Einrichtung zur elektronischen Auswertung der Signale bzw. der Rechner ein gemessenes IST-Signal mit einem SOLL-Wertbereich und erzeugt in Abhängigkeit dieses Vergleichs ein positives oder negatives Signal. F'ällt das gemessene IST-Signal außerhalb des SOLL-Wertbereich, gewährleistet das negative Signal des Rechners bzw. der Einrichtung zur elekronischen Auswertung der Signale, daß die betreffende Pressung aus dem Produktionsvorgang (als Ausschuß) genommen werden kann. Die Erfindung läßt sich folglich besonders vorteilhaft in einem automatischen Produktionsprozeß verwenden.

Die Erfindung und hier insbesondere der Gegenstand des Anspruchs 14 gewährleisten den Vorteil, daß an einer Krimppresse in einfacher Weise das Presswerkzeug ausgetauscht werden kann, wobei die Meßsonde an der meßtechnisch günstigen Stelle an der Presse verbleibt. Hierdurch wird auch vermieden, jeweils bei Austausch des Presswerkzeuges eine neue Presse-bedingte Eichung des Sensors durchzuführen, was notwendig wäre, wenn der Sensor Presswerkzeug-gebunden wäre.

Die vorliegende Neuerung betrifft darüber hinaus eine sog. Krimppresse zum Verpressen von Kabelschuhen mit Kabellitzen, wobei die Krimppresse ein mechanisch, pneumatisch oder hydraulisch angetriebenes Preßwerkzeug sowie eine auf einem Preßuntergestell angeordnete Grundplatte, die das Preßwerkzeug aufnimmt, aufweist.

Zur Gewährleistung einer möglichst exakten Überprüfung von Pressungen sowie Aussonderungen schlechter Pressungen insbesondere während eines automatisierten Herstellungsprozessßes ist die gattungsgemäße Krimppresse dadurch gekennzeichnet, daß eine Vorrichtung zur Erfassung der Kraft beim Verpressen gemäß mindestens einem der Ansprüche 1 bis 13 Verwendung findet.

Der Gegenstand der vorliegenden Anmeldung betrifft darüber hinaus auch ein Verfahren zur Erfassung der Kraft beim Verpressen von Kabelschuhen unter Verwendung der erfindungsgemäßen Vorrichtung nach den Ansprüchen 1 - 14. Dieses Verfahren ist erfindungsgemäß dadurch gekennzeichnet, daß abhängig von dem zu verpressenden Teil zu Beginn mindestens eine Kalibrierkurve erstellt wird, welche Grundlage für die nachfolgende Erfassung der Qualität der Verpressung ist, daß man während dem Verpressen nicht die absoluten Kraftwerte sondern ausschließlich die Abweichungen der jeweiligen Pressung von der festgestellten Kalibrierkurve ermittelt und die jeweilige Pressung dann angezeigt oder ausgesondert wird, wenn die festgestellte IST-Abweichung einen vorgegebenen SOLL-Wert übersteigt.

Eine neuerungsgemäße Ausgestaltung der Vorrichtung der Kraft beim Verpressen von Kabelschuhen mit Kabellitzen wird anhand der Zeichnungen näher erläutert. Es zeigen:
- Fig. 1: eine Krimppresse in Vorderansicht (a) sowie in Seitenansicht (b);
- Fig. 2: die Unterseite der Zwischenplatte mit den Dehnmeßstreifen sowie
- Fig. 3: ein Blockschaltbild zur Darstellung der zur Meßwertaufbereitung erforderlichen Komponenten.
- Fig. 4: eine vergrößerte Darstellung des mit A gekennzeichneten Bereichs der Krimppresse nach Fig. 1;

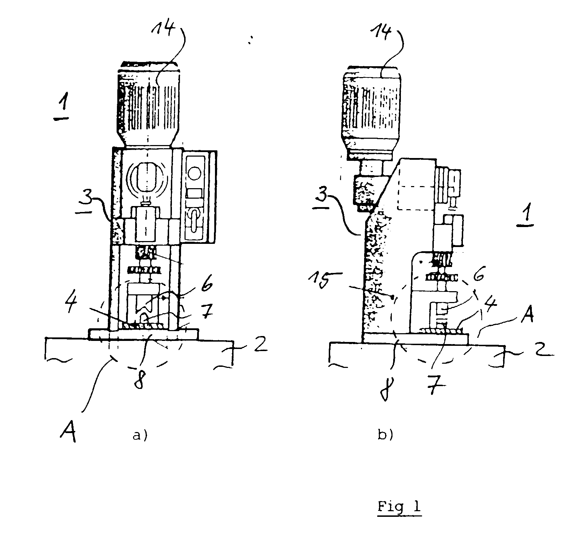

Fig. 1 a zeigt eine sog. Krimppresse 1 zur Verpressung von Kabelschuhen mit Kabellitzen. Die Krimppresse 1 besitzt einen Antrieb 14 in Form eines Elektromotors dessen Kraft über eine geeignete Kupplung auf den oberen Presstempel 6 des Preßwerkzeugs 3 übertragen wird. Der mit der Kabellitze zu verpressende Kabelschuh wird zwischen die beiden Preßstempeln 6 und 7 eingeführt, der obere Preßstempel 6 anschließend nach unten bewegt und eine Verpressung vorgenommen.

Der auf einer Halteplatte montierte untere Preßstempel 7 befindet sich an der Oberseite der sog. Zwischenplatte 4.

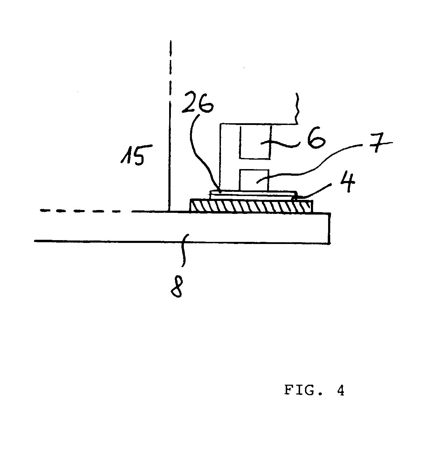

Aus Fig. 4 ist ersichtlich, daß der untere Preßstempel 7 als Halterung eine Halteplatte 26 aufweist, welche - wie nachstehend näher erläutert werden wird - lösbar mit der Zwischenplatte 4 verbunden ist. Hierdurch kann das jeweilige Presswerkzeug in einfacher Weise ausgetauscht werden, ohne daß ein Austausch der Zwischenplatte zu erfolgen hat.

Unter "Preßwerkzeug 3" sind die Preßstempel 6 und 7 sowie deren Halterung zu verstehen.

Die Presse 1 weist ferner ein Pressengehäuse 15 auf, von dem die einzelnen Maschinenteile getragen werden.

Die Zwischenplatte ist mit der Grundplatte 8 der Presse 1 fest, aber lösbar bzw. über eine Schraubverbindung verbunden.

Die Montage der Halteplatte des Preßwerkzeugs auf der Zwischenplatte erfolgt über (nicht dargestellte) Anschläge und über eine schnellösbare Schraubverbindung.

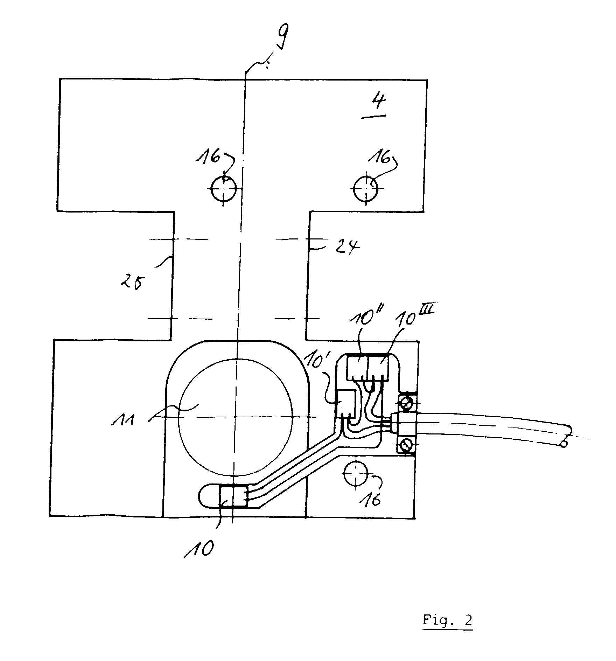

In Fig. 2 ist die Zwischenplatte 4 und zwar deren Oberseite vergrößert dargestellt. Die Zwischenplatte 4 weist mehrere Bohrungen 16 auf, welche zur Aufnahme der (nicht dargestellten) Befestigungsschrauben dienen.

Bezugsziffer 9 kennzeichnet die sog. "Kraftflußlinie", d.h. diejenige Linie bzw. deren Verlängerung, entlang der die Zugkraft an der Zwischenplatte 4 am höchsten ist.

An der Unterseite der Zwischenplatte 4 sind mehrere Dehnmeßstreifen 10, 10^{I-III} vorgesehen, wobei ein Dehnmeßstreifen 10 mittig von der Kraftflußlinie geschnitten wird. Der Dehnmeßstreifen 10 erfasst die im Bereich der Kraftflußlinie erzeugte Zugspannung während des Krimpens. Zweckmäßigerweise ist dieser Dehnmeßstreifen unterhalb des Preßstempels 7 angeordnet.

Der Dehnmeßstreifen 10^{I} hat die Aufgabe, Temperaturbedingte Spannungsveränderungen an der Zwischenplatte zu erfassen und hierdurch eine Temperaturkompensation durchzuführen, wodurch wiederum die Meßgenauigkeit erhöht werden kann. Den Meßstreifen 10^{II-III} sind lediglich Verstärker-bedingt, können jedoch auch weggelassen werden.

Die Dehnmeßstreifen 10, 10^{I-III} sind untereinander sowie mit einer Meßwertaufnahme vernetzt.

An der Oberseite der Zwischenplatte 4 befinden sich (nicht dargestellte) Krallen, welche eine einfache Ausrichtung des Preßwerkzeugs 3 ermöglichen. Die Krallen wirken gleichsam als Anschlag und somit als Fixierung des Preßwerkzeugs. Die Befestigung kann dann in vorteilhafter Weise über eine Schraubverbindung oder dgl. erfolgen.

Die Zwischenplatte 4 weist an ihrem Seitenbereich zwei Ausnehmungen 24, 25 auf, welche vorgesehen sind, um entsprechende Teile des Pressengehäuses 15 oder des Preßwerkzeugs 3 aufzunehmen.

Die Oberfläche der Zwischenplatte 4 ist spanend behandelt z. B. geschliffen und vorzugsweise zusätzlich poliert, wodurch die Meßgenauigkeit erheblich gesteigert wird.

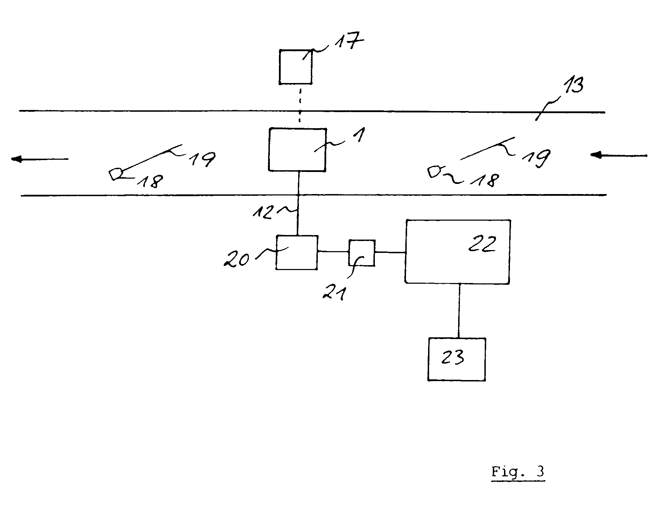

Fig. 3 zeigt die Einbindung der neuerungsgemäßen Vorrichtung in einen automatischen Herstellungsprozeß. Bezugszeichen 13 steht für ein Fließband, auf dem Kabel 19 sowie Kabelschuhe 18 zu einer Krimppresse gefördert werden.

In der Krimppresse 1 werden die Kabel 19 sowie Kabelschuhe 18 in der beschriebenen Weise miteinander verpreßt, wobei aufgrund der Dehnmeßstreifen ein der Krimpkraft entsprechendes Signal erzeugt wird. Dieses Signal wird in einem Verstärker 20 verstärkt, in einem A/D-Wandler in ein Digitalsignal gewandelt und im Rechner 22 verarbeitet. Eine Anzeige des gemessenen Werts erfolgt über die Anzeigeeinrichtung 23.

Der Rechner 22 vergleicht ein gemessenes IST-Signal mit einem SOLL-Wert bzw. SOLL-Wertbereich und erzeugt in Abhängigkeit dieses Vergleichs ein positives oder negatives Signal. Weicht das gemessene IST-Signal vom SOLL-Wert bzw. SOLL-Wertbereich ab, erzeugt der Rechner 22 ein negatives Signal welches über einen Datenbus 12 zur Krimppresse 1 übermittelt wird und dafür sorgt, daß über geeignete Einrichtungen die betreffende, mangelhafte Verbindung zwischen Kabelschuh 18 und Kabeliltze 19 aus dem Produktionsprozeß als Ausschuß 17 ausgesondert wird.

## Patentansprüche

1. Vorrichtung zur Erfassung der Kraft beim Verpressen von Kabelschuhen mit Kabellitzen unter Verwendung einer mechanisch-, pneumatisch oder hydraulisch angetriebenen Krimppresse, welche einen oberen (6) wie unteren Preßstempel (7) aufweist und der untere Preßstempel mit einer Halteplatte (26) in Form eines Widerlagers mit der Presse in Verbindung steht sowie ein Sensor (10) zur Erfassung der Verpreßkraft im Bereich des unteren Preßstempels angeordnet ist, wobei dessen Signale über eine Meßwertaufbereitung verarbeitbar und anzeigbar sind,
**dadurch gekennzeichnet,**
daß eine auswechselbare Zwischenplatte (4) unter der Halteplatte (26), auf welcher der untere Preßstempel (7) montiert ist,vorgesehen ist und die Zwischenplatte (4) den Sensor trägt.

2. Vorrichtung nach Anspruch 1,
**dadurch gekennzeichnet,**
daß als Sensor mindestens ein Dehnmeßstreifen (z.B. 10) vorgesehen ist.

3. Vorrichtung nach Anspruch 2,
**dadurch gekennzeichnet,**
daß der Dehnmeßstreifen (z.B. 10) im Bereich der auf der Zwischenplatte (4) einwirkenden Kraftflußlinie (9) liegt.

4. Vorrichtung nach Anspruch 3,
dadurch gekennzeichnet,
daß der Dehnmeßstreifen (z. B. 10) derart angeordnet ist, daß die Kraftflußlinie (9) den Dehnmeßstreifen (10) schneidet.

5. Vorrichtung nach den Ansprüchen 1 oder 2,
dadurch gekennzeichnet,
daß zur Erfassung unterschiedlicher Einflußgrößen mehrere Dehnmeßstreifen (10, 10^{I-III}) an unterschiedlichen Stellen der Zwischenplatte (4) vorgesehen sind.

6. Vorrichtung nach den Ansprüchen 1 bis 5,
dadurch gekennzeichnet,
daß der oder die Dehnmeßstreifen (10, 10^{I-III}) an der Unterseite der Zwischenplatte (4) angeordnet ist bzw. sind.

7. Vorrichtung nach den Ansprüchen 1 bis 6,
dadurch gekennzeichnet,
daß die Zwischenplatte (4) oberflächenbehandelt ist.

8. Vorrichtung nach Anspruch 7,
dadurch gekennzeichnet,
daß die Zwischenplatte zumindest im Bereich der Dehnmeßstreifen (10, 10^{I-III}) spanend bearbeitet und/oder poliert ist.

9. Vorrichtung nach den Ansprüchen 1 bis 8,
dadurch gekennzeichnet,
daß die Zwischenplatte (4) sowohl mit der Grundplatte (8) der Presse als auch mit dem Preßwerkzeug (3) lösbar verbunden ist.

10. Vorrichtung nach Anspruch 7,
dadurch gekennzeichnet,
daß die Verbindung durch Klemmittel erfolgt.

11. Vorrichtung nach den Ansprüchen 1 bis 10 ,
dadurch gekennzeichnet,
die Zwischenplatte (4) eine Durchführung (11) zur Entfernung von beim Verpressen entstehendem Abfall aufweist.

12. Vorrichtung nach den Ansprüchen 1 bis 11,
dadurch gekennzeichnet,
daß zur Signalaufbereitung ein Verstärker (20), ein A/D-Wandler (21), ein Rechner oder eine Einrichtung zur elektronischen Auswertung der Signale (22) sowie eine Anzeigeeinrichtung (23) vorgesehen ist.

13. Vorrichtung nach Anspruch 12,
dadurch gekennzeichnet,
daß der Rechner (22) ein gemessenes IST-Signal mit einem SOLL-Wert bzw. SOLL-Wert-Bereich vergleich und in Abhängigkeit dieses Vergleichs ein positives oder ein negatives Signal erzeugt.

14. Vorrichtung nach den Ansprüchen 1 -13,
dadurch gekennzeichnet,
daß der untere Preßstempel (7) auf einer Werkzeugplatte (26) befestigt ist und die Zwischenplatte (4) sich zwischen Werkzeugplatte (26) und Rückplatte (8) oder Untergestell (2) der Presse (1) angeordnet ist, so daß bei identischer Zwischenplatte (4) und damit identischem Sensor Preßwerkzeuge austauschbar sind.

15. Presse zum Verpressen von Teilen, insbesondere Krimppresse zum Verpressen von Kabelschuhen und Kabellitzen, mit einer Grundplatte sowie einem auf der Grundplatte montierten Preßwerkzeug,
gekennzeichnet durch
eine Vorrichtung zur Erfassung der Kraft während des Verpressens gemäß mindestens einem der Ansprüche 1 bis 14.

## Claims

1. Device for measuring the force applied when compressing cable terminals with cable strands using a mechanically, pneumatically or hydraulically driven crimping press which has an upper (6) and a lower pressing ram (7), and the lower pressing ram is connected to a holding plate (26) in the form of an abutment with the press, and a sensor (10) for measuring the compression force is arranged in the area of the lower pressing ram, it being possible for the signals of the sensor to be processed and displayed by means of a measured value conditioning system, characterised in that an exchangeable intermediate plate (4) is provided under the holding plate (26) on which the lower pressing ram (7) is mounted and the intermediate plate (4) carries the sensor.

2. Device according to Claim 1,
characterised in that at least one wire strain gauge (for example 10) is provided as the sensor.

3. Device according to Claim 2,
characterised in that the wire strain gauge (for example 10) lies in the area of the force flux line (9) acting on the intermediate plate (4).

4. Device according to Claim 3,
characterised in that the wire strain gauge (for example 10) is arranged in such a manner that the force flux line (9) intersects the wire strain gauge (10).

5. Device according to Claim 1 or 2,
characterised in that, in order to measure different influencing variables, several wire strain gauges (10, 10^{I-III}) are provided at different sites on the intermediate plate (4).

6. Device according to Claims 1 to 5,
characterised in that the wire strain gauge(s) (10, 10^{I-III}) is (are) arranged on the lower side of the intermediate plate (4).

7. Device according to Claims 1 to 6,
characterised in that the intermediate plate (4) is surface-treated.

8. Device according to Claim 7,
characterised in that the intermediate plate is machined down and/or polished at least in the area of the wire strain gauge(s) (10, 10^{I-III}).

9. Device according to Claims 1 to 8,
characterised in that the intermediate plate (4) is releasably connected both to the base plate (8) of the press and to the pressing tool (3).

10. Device according to Claim 7,
characterised in that the connection is effected by clamping means.

11. Device according to Claims 1 to 10,
characterised in that the intermediate plate (4) has a through-passage (11) for removing waste formed during compression.

12. Device according to Claims 1 to 11,
characterised in that an amplifier (20), an A/D converter (21), a computer or a device for the electronic evaluation of the signals (22), and also a display device (23) are provided for the signal conditioning operation.

13. Device according to Claim 12,
characterised in that the computer (22) compares a measured actual signal with a desired value or desired value range and generates a positive or a negative signal in accordance with this comparison.

14. Device according to Claims 1 to 13,
characterised in that the lower pressing ram (7) is secured to a tool plate (26) and the intermediate plate (4) is arranged between the tool plate (26) and the rear plate (8) or the underframe (2) of the press (1), so that, with an identical intermediate plate (4) and thus an identical sensor, pressing tools can be exchanged.

15. Press for compressing parts, especially a crimping press for compressing cable terminals and cable strands, having a base plate and a pressing tool mounted on the base plate, characterised by a device for measuring the force applied during compression according to at least one of Claims 1 to 14.

## Revendications

1. Dispositif pour la mesure de la force lors du sertissage de cosses de câble sur des fils de câbles au moyen d'une presse de sertissage entraînée mécaniquement, pneumatiquement ou hydrauliquement, et qui présente un poinçon supérieur (6) ainsi qu'un poinçon inférieur (7), le poinçon inférieur étant en liaison avec la presse par l'intermédiaire d'une plaque de maintien (26) en forme de butée, un capteur (10) pour la mesure de la force de compression étant agencé dans la zone du poinçon inférieur, les signaux du capteur pouvant être traités et affichés par l'intermédiaire d'un dispositif de traitement des valeurs de mesure, caractérisé en ce qu'une plaque intermédiaire (4) interchangeable est prévue sous la plaque de maintien (26), sur laquelle le poinçon inférieur (7) est monté, et en ce que la plaque intermédiaire (4) porte le capteur.

2. Dispositif selon la revendication 1, caractérisé en ce que, comme capteur, au moins une jauge d'allongement (par exemple 10) est prévue.

3. Dispositif selon la revendication 2, caractérisé en ce que la jauge d'allongement (par exemple 10) est disposée dans la zone de la ligne de force (9) agissant sur la plaque intermédiaire (4).

4. Dispositif selon la revendication 3, caractérisé en ce que la jauge d'allongement (par exemple 10) est disposée de telle sorte que la ligne de force (9) coupe la jauge d'allongement (10).

5. Dispositif selon les revendications 1 ou 2, caractérisé en ce que pour la mesure de différentes grandeurs d'influence, plusieurs jauges d'allongement (10, 10^{I-III}) sont prévues à différents endroits de la plaque intermédiaire (4).

6. Dispositif selon l'une quelconque des revendications 1 à 5, caractérisé en ce que la ou les jauges d'allongement (10, 10^{I-III}) est ou sont agencée(s) sur la face inférieure de la plaque intermédiaire (4).

7. Dispositif selon l'une quelconque des revendications 1 à 6, caractérisé en ce que la plaque intermédiaire (4) a subi un traitement de surface.

8. Dispositif selon la revendication 7, caractérisé en ce qu'au moins dans la zone des jauges d'allongement (10, 10^{I-III}), la plaque intermédiaire est traitée par enlèvement de copeaux et/ou est polie.

9. Dispositif selon l'une quelconque des revendications 1 à 8, caractérisé en ce que la plaque intermédiaire (4) est reliée de façon amovible aussi bien à la plaque de base (8) de la presse qu'à l'outil (3) de compression.

10. Dispositif selon la revendication 7, caractérisé en ce que la liaison est réalisée par des moyens de serrage.

11. Dispositif selon l'une quelconque des revendications 1 à 10, caractérisé en ce que la plaque intermédiaire (4) présente un passage (11) pour l'enlévement de déchets résuLtant du sertissage.

12. Dispositif selon l'une quelconque des revendications 1 à 11, caractérisé en ce que pour le traitement des signaux, un amplificateur (20), un convertisseur analogique-numérique (21), un calculateur ou un dispositif pour l'exploitation électronique des signaux (22), ainsi qu'un dispositif d'affichage (23), sont prévus.

13. Dispositif selon la revendication 12, caractérisé en ce que le calculateur (22) compare un signal réel mesuré avec une valeur de consigne ou un intervalle de consigne et, en fonction de cette comparaison, produit un signal positif ou négatif.

14. Dispositif selon l'une quelconque des revendications 1 à 13, caractérisé en ce que le poinçon inférieur (7) est fixé sur une plaque d'outil (26) et la plaque intermédiaire (4) est disposée entre la plaque d'outil (26) et une plaque arrière (8) ou un support (2) de la presse (1), de telle sorte que, pour une plaque intermédiaire (4) identique et, par conséquent, un capteur identique, des outils de compression sont interchangeables.

15. Presse pour la compression de pièces, notamment presse de sertissage pour le sertissage de cosses de câble et de fils de câble, comprenant une plaque de base ainsi qu'un outil de compression monté sur la plaque de base, caractérisée par un dispositif pour la mesure de la force lors du sertissage selon au moins une des revendications 1 à 14.
